# EUROPÄISCHE PATENTANMELDUNG

(11) **EP 3 399 377 A1**
(43) Veröffentlichungstag der Anmeldung: **07.11.2018**
(21) Anmeldenummer: 18170097.2
(22) Anmeldetag: 30.04.2018
(51) Int. Cl.: G05D 1/00, B64F 1/00

(54) **VERFAHREN ZUR ÜBERWACHUNG MITTELS EINER FERNSTEUERBAREN DROHNE**

(30) Priorität: 02.05.2017 DE 102017109370; 06.06.2017 DE 102017112415; 19.06.2017 DE 102017113351
(71) Anmelder: Mohamad, Gabriel Hassan, 21220 Seevetal (DE); Mohamad, Ali, 21220 Seevetal (DE)
(72) Erfinder: Mohamad, Gabriel Hassan, 21220 Seevetal (DE); Mohamad, Ali, 21220 Seevetal (DE)
(74) Vertreter: Raffay & Fleck

(57) **Zusammenfassung**

Die Anmeldung betrifft ein Verfahren zur Überwachung mittels eines fernsteuerbaren Fahrzeuges, insbesondere einer Drohen, sowie entsprechende Vorrichtungen und Verfahren zur Erstellung von Bildern.

Aufgabe der vorliegenden Erfindung ist es, ein Verfahren sowie Vorrichtungen anzugeben, um fernsteuerbare Fahrzeuge, insbesondere Drohnen, für den Zweck der Überwachung bzw. Objektsicherung mit besonderen Vorteilen einzusetzen.

Die Aufgabe wird gelöst durch ein Verfahren zur Überwachung mittels eines fernsteuerbaren Fahrzeugs, dadurch gekennzeichnet dass, der Hangar das Fahrzeug bei Empfang einer entsprechenden Anweisung eines entfernten Benutzers und/oder Servers und/oder zu einer vorbestimmten Zeit und/oder nach Ablauf einer vorbestimmten Zeit und/oder bei Eintritt eines durch mindestens einen Sensor erfassten Zustandes und/oder Ereignisses freigibt und das Fahrzeug den Hangar verlässt und eine vorbestimmte Route zurücklegt und beim Zurücklegen der Route Informationen, insbesondere Bilder mit der Kamera, erfasst. Sie wird auch gelöst durch ein Verfahren zur Erfassung von Bildern, ein fernsteuerbares Fahrzeug und einen Hanger wie ein entsprechendes System.

## Beschreibung

Die Anmeldung betrifft ein Verfahren zur Überwachung mittels eines fernsteuerbaren Fahrzeuges, insbesondere einer Drohen, sowie entsprechende Vorrichtungen und Verfahren zur Erstellung von Bildern.

Fernsteuerbare Fahrzeuge, insbesondere auch Drohnen, sind zur Aufnahme von Bildern bekannt und werden diesbezüglich zahlreich eingesetzt. Auch für andere Zwecke ist ihr Einsatz bekannt, so beispielsweise zur Beförderung von Lasten.

Es ist auch bekannt, einen mobilen Hangar vorzusehen, auf bzw. in dem die Drohne landen und in dem sie verwahrt werden kann. Bekannt sind derartige Vorrichtungen beispielsweise aus der WO 2017/029611 A1 und der WO 2016/205415 A1.

Aus der US201 6/0332748 A1 ist zudem ein Landfahrzeug bekannt, dass ein unbenanntes Fluggerät aufnehmen und auf entsprechende Bedienung durch einen Benuter im Landfahrzeug das unbemannte Fluggerät aussenden kann, wobei das Aussenden verhindert wird, wenn sich das Landfahrzeug mit einer Geschwindigkeit zwischen 30 und 100 mph bewegt oder ein Hindernis im Flugpfad liegt. Auch ist es aus der US201 6/0332748 A1 bekannt, dass das unbemannte Fluggerät veranlasst, dass ein Deckel geöffnet wird, sobald es starten soll.

Aufgabe der vorliegenden Erfindung ist es, ein Verfahren sowie Vorrichtungen anzugeben, um ferngesteuerte Fahrzeuge, insbesondere Drohnen, und einem Hangar für den Zweck der Überwachung bzw. Objektsicherung mit besonderen Vorteilen einzusetzen. Dazu weist nicht nur das Fahrzeug bzw. der Hangar bestimmte Merkmale auf, sondern ist auch das Verfahren besonders ausgestaltet.

Im Rahmen des erfindungsgemäßen Verfahrens zur Überwachung mittels eines fernsteuerbaren Fahrzeuges, insbesondere Luftfahrzeuges, beispielsweise einer Drohne, weist dieses Fahrzeug mindestens ein Positionsbestimmungsmittel, ein Bilddatenübertragungsmittel sowie mindestens eine Kamera, insbesondere mindestens ein Beleuchtungsmittel und mindestens ein Kommunikationsmittel zur Entgegennahme von Steueranweisungen auf. Bilddatenübertragungsmittel und Kommunikationsmittel können dabei gemeinsam als ein Mittel ausgestaltet sein. Als Positionsbestimmungsmittel kommt beispielsweise ein GPS Empfänger in Frage, es können zusätzlich oder alternativ aber auch andere Positionsbestimmungsmittel genutzt werden. Auch der Einsatz von Mitteln in Lokalen Ortungssystem und/oder Ortungsfunkfeldern ist dabei vorteilhaft. Auch ist eine Positionsbestimmung aus Bilddaten der Kamera oder anderen Sensoren möglich. Vorteilhafterweise wird jedoch mindestens auch ein Positionsbestimmungsverfahren eingesetzt und entsprechende Mittel an dem Fahrzeug vorgehalten, das auf der Auswertung von Funkwellen oder per Funk übertragenen Informationen basiert.

Bei der Kamera kann es sich beispielsweise um eine optische Kamera, eine IR-Kamera und/oder eine Nachtschichtkamera, beispielsweise mit Restlichtverstärker handeln.

Bei einem fernsteuerbaren Fahrzeug kann es sich in dieser Anmeldung generell insbesondere um ein fernsteuerbare Luftfahrzeug, insbesondere propellerbetrieben und/oder um ein Wasserfahrzeug handeln, insbesondere ein solches, dass zumindest auch Unterwasser, also vollständig abgetaucht, fernsteuerbar bewegbar ist, insbesondere eingerichtet ist, mindestens eine Tauchtiefe von zwei Metern, besonders bevorzugt mindestens 5 Metern, erreichen zu können.

Generell wird es bezüglich der in dieser Anmeldung offenbarten Erfindung bevorzugt, wenn das fernsteuerbare Fahrzeug eine beschusshemmende Verkleidung und/oder ein beschusshemmendes Gehäuse aufweist, das das Fahrzeug zumindest teilweise unempfindlicher gegen Beschuss macht und/oder es zumindest teilweise umgibt. Die beschusshemmende Verkleidung und/oder das beschusshemmendes Gehäuse erfüllen insbesondere die Anforderungen der Schutzklasse 1, 2, 3 und/oder 4 der deutschen Technischen Richtlinie TR "Ballistische Schutzwesten", Stand: März 2008 - Revisionen Oktober 2008 und September 2009. Die beschusshemmende Verkleidung und/oder das beschusshemmende Gehäuse umgeben insbesondere die Drohnen Oberfläche zu mindestens 70%. Die beschusshemmende Verkleidung und/oder das beschusshemmende Gehäuse weisen insbesondere eine viskoelastisch und/oder nichtnewtonsche Substanz auf.

Generell wird es bezüglich der in dieser Anmeldung offenbarten Erfindung bevorzugt, wenn das fernsteuerbare Fahrzeug seine Energie aus einem mitgeführten Akku bezieht und/oder über eine Stromleitung mit Energie versorgt wird. Für letzteres ist das Fahrzeug über die Stromleitung mit einer Basisstation, insbesondere der Hanger, verbunden und weist das Fahrzeug und/oder die Basisstation eine Vorrichtung zum Aufnehmen und Herauslassen der Stromleitung auf, die insbesondere so eingerichtet ist, das Stromleitung aufgenommen wird, wenn sich das Fahrzeug der Basistation nähert und Stromleitung herausgelassen wird, wenn sich das Fahrzeug von der Basisstation entfernt.

Generell wird es bezüglich der in dieser Anmeldung offenbarten Erfindung bevorzugt, wenn das fernsteuerbare Fahrzeug und/oder der Hanger ein Mikrofon zur Erkennung von Umgebungsgeräuschen aufweist und/oder wenn das Verfahren zur Überwachung die Auswertung der aufgenommenen Geräusche beinhaltet und bei erkannten vorbestimmten Geräuschen, beispielsweise das Klirren einer zerbrechenden Scheibe und/oder bei Überschreiten eines vorbestimmten Lärmpegels und/oder eines vorbestimmten Lärmpegelanstiegs ein Alarm ausgelöst und/oder das Verlassen des Fahrzeuges aus dem Hanger bewirkt wird und insbesondere Bilder durch das Fahrzeug erfasst und an einen Server oder eine Gegenstelle, insbesondere via Hanger, übermittelt werden.

Generell wird es bezüglich der in dieser Anmeldung offenbarten Erfindung bevorzugt, wenn das fernsteuerbare Fahrzeug und/oder der Hanger ein Olfaktometer zur Erkennung von Gerüchen aufweist und/oder wenn das Verfahren zur Überwachung die Auswertung der aufgenommenen Gerüche beinhaltet und bei erkannten vorbestimmten Gerüchen, beispielsweise Angstschweiß und/oder bei Überschreiten eines vorbestimmten Geruchspegels und/oder eines Geruchspegelanstiegs ein Alarm ausgelöst und/oder das Verlassen des Fahrzeuges aus dem Hanger bewirkt wird und insbesondere Bilder durch das Fahrzeug erfasst und an einen Server oder eine Gegenstelle, insbesondere via Hanger, übermittelt werden.

Generell wird es bezüglich der in dieser Anmeldung offenbarten Erfindung bevorzugt, wenn das fernsteuerbare Fahrzeug und/oder der Hanger mindestens einen Sensor zur Erfassung von Wetterzuständen, wie Niederschlagssensor, Windmesser, Temperaturmesser aufweist zur Erkennung von Umweltgefahren wie Überschwemmungen aufweist und/oder wenn das Verfahren zur Überwachung die Auswertung der aufgenommenen Umweltzuständen beinhaltet und bei erkannten vorbestimmten Zuständen und/oder bei Überschreiten mindestens eines vorbestimmten Grenzwertes Alarm ausgelöst und/oder das Verlassen des Fahrzeuges aus dem Hanger bewirkt wird, insbesondere sofern nicht ein Zustand erkannt wird, bei dem das Fahrzeug den Hanger nicht verlassen darf, kann und/oder soll und insbesondere in einem solchen Fall das Verlassen nach Beendigung des Zustandes, bei dem das Fahrzeug den Hanger nicht verlassen darf, kann und/oder soll, ein Verlassen des Fahrzeuges aus dem Hanger bewirkt wird und insbesondere Bilder durch das Fahrzeug erfasst und an einen Server oder eine Gegenstelle, insbesondere via Hanger, übermittelt werden.

Generell wird es bezüglich der in dieser Anmeldung offenbarten Erfindung bevorzugt, wenn das fernsteuerbare Fahrzeug und/oder der Hanger einen Funkscanner, insbesondere Mobilfunkscanner zur Erkennung Funksendern aufweist und/oder wenn das Verfahren zur Überwachung auf Funksignale, insbesondere mittels eines Funkscanners, umfasst und bei erkennen von Sendern insbesondere auf vorbestimmten Frequenzbändern, insbesondere unbekannten Sendern, insbesondere in einem vorbestimmten Umkreis und/oder von Funksignalen, die einen vorbestimmten Pegel überschreiten, insbesondere auf vorbestimmten Frequenzbändern, und/oder bei Überschreiten eines vorbestimmten Pegelanstiegs von Funksignalen ein Alarm ausgelöst und/oder das Verlassen des Fahrzeuges aus dem Hanger bewirkt wird und insbesondere Bilder durch das Fahrzeug erfasst und an einen Server oder eine Gegenstelle, insbesondere via Hanger, übermittelt werden.

Generell wird es bezüglich der in dieser Anmeldung offenbarten Erfindung bevorzugt, wenn das fernsteuerbare Fahrzeug einen Laser, insbesondere mit einer roten Lichtfarbe, beispielsweise mit einer Wellenlänge zwischen 600 und 800 nm, aufweist und so eingerichtet ist, dass er damit einen Fläche und/oder Linie rot ausleuchten kann, beispielsweise dadurch, dass der Laser ein Linienlaser ist und/oder das Fahrzeug einen Scanner aufweist, der eingerichtet ist, den Laserstrahl über die Fläche wandern zu lassen und zwar mit einer Geschwindigkeit, die vom menschlichen Auge nicht aufgelöst wird und/oder Beispielsweise mit einer Wiederholrat von mehr als 40 Mal pro Sekunde. Mit besonderem Vorteil ist der Laser Teil eines Lasermesssystems, zum Beispiel eines Laserentfernungsmesssystem, das insbesondere eingerichtet ist, das Höhenprofil einer und/oder der Fläche zu vermessen.

Generell wird es bezüglich der in dieser Anmeldung offenbarten Erfindung bevorzugt, wenn das Verfahren zur Überwachung die Beleuchtung einer Fläche und/oder Linie vom Fahrzeug aus mit einem roten Licht, beispielsweise rotem Laserlicht, beinhaltet, insbesondere der Art, das die Fläche und/oder Linie relativ zum Fahrzeug bewegt wird, beispielsweise durch eine entsprechende Ansteuerung eines Scanners, über den rotes Licht, insbesondere Laserlicht, geleitet wird. Dabei wird der Scanner insbesondere der Art angesteuert, dass sich eine Wiederholrate von mehr als 40 Mal pro Sekunde ergibt.

Generell wird es bezüglich der in dieser Anmeldung offenbarten Erfindung bevorzugt, wenn das Verfahren zur Überwachung beinhaltet, dass die durch Sensoren des Fahrzeuges, insbesondere durch die Kamera, erfasste Daten hinsichtlich der Erkennung von schnellen und/oder hektischen Bewegungen eines Objekts, insbesondere auf das Fahrzeug zu, ausgewertet wird. Schnelle und/oder hektische Bewegungen können beispielsweise durch eine Geschwindigkeit größer einer vorgegebenen Geschwindigkeitsschwelle und/oder durch eine Beschleunigung größer einer vorgegebenen Beschleunigungsschwelle eines Objekts gegeben und/oder erkannt werden. Dabei können die Schwellen als Vektorfunktion in abhängig von der relativen Orientierung zum Fahrzeug vorgegeben sein. Sie können auch in Abhängigkeit anderer Eigenschaften des Objektes, beispielsweise seiner Größe, seines Abstandes zum Fahrzeug und/oder Position relativ zum Fahrzeug und/oder der dem Objekt zugewiesenen Klassifizierung vorgegeben werden. Insbesondere wird im Rahmen einer bevorzugten Umsetzung des Verfahrens einer erkannten schnellen und/oder hektischen Bewegungen das Fahrzeug von dem Objekt weggesteuert und/oder auf eine vorgegebene Distanz gebracht.

Generell wird es bezüglich der in dieser Anmeldung offenbarten Erfindung bevorzugt, wenn das Verfahren zur Überwachung beinhaltet, bei der Erkennung, auf Basis der Auswertung von durch Sensoren des Fahrzeuges, insbesondere durch die Kamera, erfassten Daten, von Objekten mit vorgegebenen Eigenschaften oder einer vorgegebenen Klassifizierung, insbesondere bei Erkennung einer, insbesondere unbefugten und/oder nicht authentifizierten Person, das Fahrzeug so zu steuern, dass es sich über der erkannten Person aufhält, insbesondere in einer Höhe von mindestens 4 Metern, insbesondere mindestens 7m, über der Person und/oder dem Boden. Dabei bedeutet das Aufhalten über einer Person, insbesondere, dass sich die Person vertikal unterhalb des Fahrzeuges befindet und/oder, dass sich die Person innerhalb eines Kreises mit einem Durchmesser von maximal 2 Metern, insbesondere maximal 1m, mit Mittelpunkt vertikal unter dem Fahrzeug, befindet, insbesondere so, dass sich der maximal mögliche Anteil der Person innerhalb des Kreises befindet, insbesondere der in der Projektion von dem Fahrzeug aus maximale Flächenanteil.

Generell wird es bezüglich der in dieser Anmeldung offenbarten Erfindung bevorzugt, wenn das Verfahren zur Überwachung die Auswertung von mit Sensoren des Fahrzeuges erfassten Daten beinhaltet und bei Erkennung von Beschuss des Fahrzeuges, das Fahrzeug so gesteuert wird, dass es sich vom Ort des Beschusses und/oder von einer aus den Daten erkannten Quelle des Beschusses entfernt, und/oder seine Flughöhe erhöht und/oder zahlreiche Flugrichtungsänderungen, insbesondere innerhalb von 10 Sekunden mehr als 10 Flugrichtungsänderungen um mindestens 10 Grad und/oder sich in einen Hanger begibt.

Desweiteren wird erfindungsgemäß ein Hangar, insbesondere ein mobiler Hangar, zur umschließenden Aufnahme des Fahrzeuges eingesetzt, wobei der Hangar Kommunikationsmittel zur Kommunikation mit einem entfernten Benutzer und/oder Server und mit den Kommunikationsmitteln des Fahrzeuges aufweist und wobei insbesondere der Hangar und das Fahrzeug zur, insbesondere automatischen, Ladung eines im Fahrzeug befindlichen Akkus eingerichtet sind, insbesondere wenn das Fahrzeug im Hangar aufgenommen ist. Darunter ist auch das automatische Austauschen eines Akkus des Fahrzeuges im Hanger und Laden des entnommenen Akkus im Hanger zu verstehen.

Dabei ist der Hangar eingerichtet zur selbstständigen Öffnung und Freigabe des Fahrzeuges. Erfindungsgemäß gibt der Hangar das Fahrzeug bei Eintritt eines durch mindestens einen Sensor erfassten Zustandes und/oder eines Ereignisses frei oder wird er bei Eintritt eines durch mindestens einen Sensor erfassten Zustandes und/oder eines Ereignisses veranlasst, das Fahrzeug freizugeben. Vorzugsweise erfolgt die Freigabe bei Eintritt eines durch mindestens einen Sensor erfassten Zustandes vollautomatisch. Vorzugsweise kann der Hangar das Fahrzeug bei Empfang einer entsprechenden Anweisung eines entfernten Benutzers und/oder Servers und/oder zu einer vorbestimmten Zeit und/oder nach Ablauf einer vorbestimmten Zeit und/oder bei Eintritt eines durch mindestens einen Sensor erfassten Zustandes und/oder eines Ereignisses freigeben. Dabei kann die Freigabe beispielsweise durch Öffnen einer Tür oder Klappe oder generell durch Öffnen des Hangars erreicht werden. Erfindungsgemäß handelt es sich bei dem mindestens einen Sensor um einen vom Hanger losgelösten Sensor, der losgelöst und/oder örtlich entfernt vom Hangar und/oder Fahrzeug angeordnet und/oder eingesetzt wird. Der Sensor kann dabei beispielsweise per Funk und/oder Kabel mit dem Hanger gekoppelt sein. Die Kopplung kann dabei eine direkte sein, bei der die Signal des Sensors ohne zwischengeschaltete weitere Verarbeitung, beispielsweise durch eine dritte Stelle, Menschen und/oder einen Server sein oder eine indirekte, bei der die Signale des Sensors vor der Weitergabe an einer dritten Stelle weiterverarbeitet werden, beispielsweise durch einen Menschen oder einen Server. Erfindungsgemäß verlässt nach und/oder bei der Freigabe das Fahrzeug den Hangar, insbesondere vollautomatisch und/oder insbesondere ohne Zwischenschalten weiterer und/oder externer Kontroll-, Steuer- und/oder Regelungsschritte, und legt das Fahrzeug mindestens eine vorbestimmte Route zurück, insbesondere vollautomatisch und/oder insbesondere ohne Zwischenschalten weiterer und/oder externer Kontroll-, Steuer- und/oder Regelungsschritte, wobei es beim Zurücklegen der Route Informationen, insbesondere Bilder mit der Kamera des Fahrzeuges, erfasst.

Mit Vorteil weist der Hanger eine, insbesondere vertikal, verfahrbare Landefläche auf, die insbesondere aus dem Hanger herausgefahren werden kann und wieder in den Hanger hinein gefahren werden kann, insbesondere durch vertikale Bewegung. Insbesondere ist der Hanger so ausgebildet, dass die Landefläche zum Landen und/oder Starten der Drohen aus dem Hanger herausgefahren werden kann und die Drohne auf der Landefläche stehend in den Hange gefahren werden kann. Dies ist insbesondere durch einen Fahrstuhl realisiert. Die Landefläche ist insbesondere zur Platzierung der Drohen darauf geeignet.

Der Hangar stellt somit ein geschütztes Volumen bereit, das verschließbar und öffenbar ist und in dem das Fahrzeug aufgenommen werden kann. Zum Öffnen kann er beispielsweise Klappen oder Türen, beispielsweise verschwenkbar und/oder verschiebbar zum Öffnen und/oder Schließen aufweisen. Bei einem erfassten Zustand oder Ereignis kann es sich beispielsweise um die Auslösung eines Bewegungssensors oder eines andersartigen Kontaktes, ein Geräusch oder andere durch Sensoren erfassbare Zustände oder Ereignisse handeln. Dabei kann auch eine Bearbeitung, Aggregierung, Auswertung und/oder Filterung von Sensordaten durchgeführt werden, die zur Erkennung und/oder zum Eintritt des erfassten Zustandes und/oder Ereignisses führt. Das Fahrzeug kann die vorbestimmte Route selbstständig gesteuert und/oder auch durch Zusammenwirken mit anderen Mitteln, beispielsweise dem Hangar und/oder einer im Hangar befindlichen Steuerung und/oder anderen Steuerungen zurücklegen. Es können auch mehrere vorbestimmte Routen verwendet werden und zurückgelegt oder eine oder mehrere vorbestimmte Routen aus einer Vielzahl vorbestimmter Routen ausgewählt und zurück gelegt werden. Dabei kann die vorbestimmte Route in Abhängigkeit des Zustandes oder Ereignisses und/oder des auslösenden und/oder erkennenden Sensors ausgewählt werden. Entscheidend kommt es jedoch darauf an, dass diese Route automatisch und ohne Einwirkung eines Benutzers zurückgelegt wird. Die Route kann dabei durch einen vorbestimmten Pfad und/oder allein durch entsprechende Wegpunkte und insbesondere eine Reihenfolge der Wegpunkte definiert sein. Sind nur Wegpunkte definiert begibt sich das Fahrzeug nacheinander zu den vorbestimmten Wegpunkten. Auch ist es selbstverständlich möglich, dass das Fahrzeug, sollten Hindernisse auf der Route liegen, diesen ausweicht und die vorbestimmte Route danach weiter fortsetzt.

Mit besonderem Vorteil weist der Hangar eine netzunabhängige Notstromversorgung und/oder einen Stromnetzanschluss auf. Mit weiterem Vorteil weist der Hangar selbst mindestens eine Kamera auf, insbesondere mindestens eine Kamera, die nach außen und/oder mindestens eine Kamera, die ins Innere des Hangars gerichtet ist.

Mit besonderem Vorteil wird der Hangar mit einem Bauwerk oder Gegenstand lösbar fest verbunden.

Mit besonderem Vorteil verlässt das Fahrzeug den Hangar auf Veranlassung des Hangars. Dazu kann der Hangar beispielsweise mit seinen Kommunikationsmitteln mit den Kommunikationsmitteln des Fahrzeuges kommunizieren oder über andere Kommunikationswege mit dem Fahrzeug kommunizieren, um das Fahrzeug zum Verlassen des Hangars zu veranlassen. Diese Veranlassung kann allein durch eine entsprechende Anweisung zum Verlassen und/oder auch mit der

Übermittlung der zu wählenden oder einer vorbestimmten Route erfolgen. Auch kann das Fahrzeug durch den Hangar vollständig und/oder teilweise gesteuert und/oder gelenkt werden.

Mit besonderem Vorteil umfasst die vorbestimmte Route einen Punkt, der im Erfassungsbereich eines Sensors liegt, der den Eintritt des Zustandes und/oder Ereignisses, der/das das Freigeben des Fahrzeuges und das Verlassen des Hangars bewirkt hat, erfasst hat oder an dessen Erfassung und/oder Erkennung mitgewirkt har. Alternativ kann die Route insbesondere einen Punkt umfassen, von dem aus die mindestens eine Kamera des Fahrzeuges zumindest einen Teil, insbesondere den von dem Sensor, der das Ereignis und/oder den Zustand, der/das das Freigeben des Fahrzeuges und das Verlassen des Hangars bewirkt hat, erfasst hat oder an dessen Erfassung und/oder Erkennung mitgewirkt har, erfassten Bereich einsehen kann und/oder den Sensor sehen kann.

Mit besonderem Vorteil umfasst das Verfahren den Einsatz mehrerer Hangar mit jeweils mindestens einem Fahrzeug, wobei sich die Fahrzeuge bzw. die Hangar mit ihren Fahrzeugen ein vorbestimmtes und/oder zu überwachendes Gebiet und/oder einen vorbestimmten und/oder zu überwachenden Raum untereinander aufteilen, so dass nicht jedes Fahrzeug das gesamte Gebiet oder den gesamten Raum überwacht bzw. diesen durchfährt. Insbesondere ist diese Aufteilung so gestaltet, dass ein Fahrzeug aus einem ersten Hangar auch den Hangar eines zweiten Fahrzeuges, insbesondere einen zweiten Hangar überwacht, insbesondere mindestens eine vorbestimmte Routen für ein erstes Fahrzeug vorgehalten und zurückgelegt wird, die es dem ersten Fahrzeug aus einem ersten Hangar ermöglichen, einen zweiten Hangar eines zweiten Fahrzeuges mittels der Kamera des ersten Fahrzeuges zu erfassen.

Mit besonderem Vorteil ist das Verfahren so ausgebildet, dass das Fahrzeug beim Zurücklegen der vorbestimmten Route, von denen mehrere vorhanden sein können, sich nacheinander einer Mehrzahl von Logingpunkten nähert und die Annäherung des Fahrzeuges an die Logingpunkte erfasst und gespeichert wird, wobei es sich bei den Logingpunkten insbesondere um Deisterpunkte handelt.

Dabei muss die Erfassung nicht im Fahrzeug selbst erfolgen, auch wenn dies möglich ist. Die Erfassung und/oder Dokumentation kann durch Elektronik an den Logingpunkten und/oder am Fahrzeug erfolgen. Durch eine solche Verfahrensführung kann, insbesondere wenn die Erfassung und/oder Dokumentation manipulationssicher erfolgt, ein zuverlässiger Nachweis über die Annäherung an die Logingpunkte und somit indirekt ein Nachweis über die Überwachung des angrenzenden Gebietes geführt werden.

Mit besonderem Vorteil ist das Verfahren derart ausgestaltet, dass bei einem Unterbleiben eines Verlassens des Hangar durch das Fahrzeug, also in einem solchen Fall, in dem das Fahrzeug den Hangar verlassen soll bzw. dazu veranlasst wurde, dies aber nicht erfolgt, und/oder bei einer Kollision des Fahrzeuges und/oder bei einem Kontaktverlust zum Fahrzeug und/oder bei einem gescheiterten Öffnen des Hangars eine Benachrichtigung versandt wird und dadurch insbesondere der Besuch des Hangars und/oder des Fahrzeuges durch einen Menschen veranlasst wird. Unter einem ausbleibenden Verlassen ist insbesondere ein solches zu verstehen, das bei störungsfreiem Betrieb hätte stattfinden sollen. Ein Ausbleiben kann beispielsweise auch dadurch bewirkt werden, dass Umweltbedingungen gegeben sind, die ein Verlassen nicht zulassen, was beispielsweise durch entsprechende Sensoren am Hangar und/oder durch Abfrage eines Wetterberichtes oder andere Umgebungsbedingungen durch den Hangar und/oder das Fahrzeug erkannt werden kann. Insbesondere weist der Hanger und/oder das Fahrzeug Mittel auf, die Umgebungsbedingungen zu ermitteln, und ist er/es so eingerichtet, dass er ein Verlassen des Fahrzeuges aus dem Hanger bei Umgebungsbedingungen, die mindestens einer vorbestimmten Bedingung nicht erfüllen, nicht bewirkt und/oder verhindert und/oder eine sofortig Rückkehr des Fahrzeuges in den Hanger veranlasst. Insbesondere wird das Verfahren zur Überwachung so durchgeführt, dass der Hanger und/oder das Fahrzeug mindestens eine Umgebungsbedingung ermittelt und nicht startet bei Umgebungsbedingungen, die mindestens eine vorbestimmte Bedingung nicht erfüllen und/oder das Fahrzeug landet und/oder zu einem Hanger zurückkehrt bei Umgebungsbedingungen, die mindestens eine vorbestimmte Bedingung nicht erfüllen.

Dabei wird das Verfahren insbesondere so ausgeführt, das Geräusch, insbesondere mittels mindestens eines Mikrofons am Hanger und/oder Fahrzeug, erfasst und analysiert werden und beim Erkennen eines Geräusches eines Hubschrauberrotors, beispielsweise ein Wummern eines Rotors, insbesondere mit einem Pegel über einem vorgegebenen Pegel, das Fahrzeug den Hanger nicht verlässt und/oder zu diesem zurück geholt und/oder zurück gesteuert wird.

Insbesondere kann das Verfahren auch so ausgestaltet werden, dass jedes Verlassen und/oder jedes erfolgreiche Zurücklegen einer vorbestimmten Route an einen Server gemeldet wird und beim Ausbleiben einer solchen Meldung, insbesondere bis zu einer vorbestimmten Zeit, insbesondere ein Besuch des Hangars durch einen Menschen veranlasst wird und/oder eine Benachrichtigung generiert wird. Benachrichtigungen können generell über eine Anzeige, beispielsweise auf einem Bildschirm und/oder durch Absetzen einer elektronischen Meldung, beispielsweise einer SMS oder einer Email oder andersartiger Benachrichtigung, wie beispielsweise einen Anruf, optische und/oder akustische Signalisierung, durchgeführt werden.

Mit besonderem Vorteil wird das Verfahren derart ausgestaltet, dass zu unterschiedlichen Zeitpunkten vom Fahrzeug, insbesondere beim Zurücklegen mindestens einer vorbestimmten Route, insbesondere der gleichen Route, zu unterschiedlichen Zeitpunkten, erfasste Informationen verglichen werden und beim Feststellen von Unterschieden zwischen den Informationen, die vorbestimmte Abweichungen überschreiten, eine Benachrichtigung an einen Benutzer und/oder Server übermittelt wird und/oder optische und/oder akustische Signale, beispielsweise über einen Lautsprecher und/oder eine Sirene, beispielsweise an der Drohne, am Hanger oder einer anderen Überwachungseinrichtung, ausgegeben werden. Dabei kann das Vergleichen beispielsweise in dem Fahrzeug, im Hangar und/oder auf einem entfernten Server durchgeführt werden.

Bei den Informationen kann es sich beispielsweise um Geräusche, Gerüche, Bodenunebenheiten, Höhenprofile, Höhen von Objekten, Volumen von Objekten, Bewegungsgeschwindigkeiten und/oder Bewegungsrichtungen von Objekten, Wärmebild, optische Bildinformationen, insbesondere erfasst durch die Kamera, handeln.

Verglichen werden hier insbesondere Informationen aus mindestens zwei unterschiedlichen Zeitpunkten, insbesondere aufgenommen oder erfasst beim Zurücklegen mindestens einer vorbestimmten Route, insbesondere der gleichen Route, zu unterschiedlichen Zeitpunkten. Dabei werden insbesondere Informationen verglichen, die vom gleichen Ort des Fahrzeuges aus und/oder mit der gleichen Perspektive vom Fahrzeug aus erfasst wurden.

Insbesondere werden Informationen aus einem weniger als 5 min zurückliegendem Zeitpunkt mit Infoformationen von einem Zeitpunkt verglichen, zu dem sich autorisierte Personen in einer vorbestimmten Umgebung befanden.

Alternativ können auch Informationen in den Vergleich einfließen, die zuvor gespeichert wurden, beispielsweise im Fahrzeug, Hanger und/oder einem entfernten Server. Dabei kann es sich beispielsweise um Höhenprofile handeln. Solche Informationen können auch allein mit vom Fahrzeug, insbesondere beim Zurücklegen mindestens einer vorbestimmten Route erfassten Informationen verglichen werden, anstelle des Vergleichs von zu unterschiedlichen Zeitpunkten vom Fahrzeug erfassten Informationen.

Generell können beispielsweise vollständige Bilder oder Kartografien verglichen werden oder kann aus den Informationen entsprechende Metainformation, beispielsweise über einzelne Objekte, wie beispielsweise Personen, extrahiert und können diese verglichen werden.

Dadurch lassen sich Veränderungen feststellen, die insbesondere nach deren Feststellung klassifiziert werden können und ausgehend von einer solchen Klassifikation bei Überschreiten eines vorbestimmten Klassifikationsniveaus eine entsprechende Benachrichtigung oder Signalisierung bewirkt werden kann.

Zur Signalisierung können das Fahrzeug und/oder der Hangar generell akustische und/oder optische Signalisierungsmittel aufweisen. Hier kommen beispielsweise Lautsprecher, Sirenen, Lauflichter, rotierende Lichter, Lichtstrahler oder ähnliches in Frage.

Dabei ist es auch möglich, dass das Fahrzeug durch eine optische und/oder akustische Signalisierung den Ort der detektierten Abweichung und/oder das entsprechende Objekt markiert, beispielsweise durch einen entsprechenden Lichtstrahl. Auch ist es möglich, dass das Fahrzeug durch entsprechende Signalisierung seine eigene Position offenbart. Die Signalisierungen können beispielsweise unmittelbar nach Erkennung von Abweichungen oder Überschreiten von Abweichungsgrenzwerten oder Klassifizierungsschwellen bewirkt werden oder erst nach entsprechender Freigabe, beispielsweise durch einen Benutzer und/oder einen Server.

Vorteilhafterweise wird das Verfahren so ausgestaltet, dass Bildinformationen vom Fahrzeug per Funk an den Hangar übertragen werden, insbesondere unter Einsatz der Bilddatenübertragungsmittel des Fahrzeuges und entsprechender Kommunikations- oder Bilddatenübertragungsmittel des Hangars. Die Bildinformationen können am Hangar gespeichert und/oder weitergeleitet werden, insbesondere über eine verdrahtete Telekommunikationsverbindung und/oder eine Funkverbindung. Alternativ und/oder zusätzlich ist es möglich, dass auch das Fahrzeug selbst eine Kommunikationsverbindung, zur Kommunikation und/oder Bilddatenübertragung zu einem Server ohne Zwischenschaltung des Hangars aufbaut. Bevorzugt wird jedoch die Kommunikation via Hangar.

Beispielsweise kann das Verfahren so geführt werden, dass beim Detektieren von Abweichungen, insbesondere solchen, die einen Grenzwert übersteigen, ein Besuch eines Menschen am Hangar und/oder am Ort der der detektierten Abweichung und/oder am Ort des Fahrzeuges bewirkt wird und insbesondere das Eintreffen der Person dem Fahrzeug und/oder dem Hangar mitgeteilt wird und dadurch eine Signalisierung begonnen wird. Auch ist es denkbar, dass das Fahrzeug bei der Detektion von Abweichungen, insbesondere solcher, die einen Grenzwert übersteigen oder bei Übersteigen einer Klassifizierungsschwelle das Fahrzeug seinen Abstand zum entsprechenden Objekt oder zu entsprechenden Abweichungen erhöht, beispielsweise durch Erhöhung der Flughöhe und/oder durch ein Wegbegeben von der Abweichung und/oder das entsprechende Objekt und/oder den Ort der Abweichung mit der Kamera überwacht.

Vorteilhafterweise kann das Verfahren so geführt werden, dass das Fahrzeug und/oder der Hangar ein Störsignal, insbesondere Funkstörsignal, aussendet, insbesondere bei bei der Erkennung von anderen, insbesondere bewegten, Objekten, insbesondere im Lauftraum. Dabei kann das Störsignal in seiner räumlichen Verteilung so ausgebildet sein, dass es den direkten örtlichen Pfad zwischen Kommunikationsmitteln des Hangars, die auch örtlich entfernt vom Hangar angeordnet sein können, beispielsweise mit dem Hangar verkabelte Antennen die örtlich entfernt vom Hanger positioniert sind, und dem Fahrzeug möglichst ausgespart werden bzw. auf diesem Pfad eine geringere Intensität des Störsignals erzeugt wird, als dies in anderen Raumrichtungen, insbesondere in Richtung eines erkannten Objektes oder anderen Fahrzeuges der Fall ist. Insbesondere wird zur Aussendung von Störsignalen nur Vorrichtungen verwendet, die örtlich von den zur Kommunikation zwischen Hangar und Fahrzeug zum Zeitpunkt der Aussendung des Störsignal verwendeten Vorrichtung entfernt angeordnet ist.

Mit besonderem Vorteil wird das Verfahren so geführt, dass das Fahrzeug und/oder der Hangar Mittel zur Umgebungsüberwachung, insbesondere Luftraumüberwachung, aufweist.

Insbesondere kann das Verfahren so geführt werden, dass der Hangar verkabelte Antennen aufweist, die örtlich entfernt vom Hangar angeordnet sind und insbesondere über eine Fläche verteilt angeordnet sind.

Mit besonderem Vorteil kann das Verfahren so geführt werden, dass das Fahrzeug in einer vorbestimmten Fläche und/oder einem vorbestimmten Raum vorhandenen Identifikationssender und/oder Identifikationstransponder erfasst und insbesondere an den Hangar und/oder einen Server eine Information diesbezüglich übermittelt. Diese Information kann beispielsweise die Anzahl, die Orte, die Abstände zwischen solchen Sendern und/oder Transpondern und/oder ihre Bewegungsrichtung und/oder Bewegungsgeschwindigkeit und/oder die Art der Sender und/oder Transponder und/oder deren Identifikation beinhalten. Das Fahrzeug kann auch alle von ihm erfassten Identifikationssender und/oder Identifikationstransponder erfassen und diesbezüglich Informationen an den Hangar und/oder an einen Server übermitteln. Dadurch ist es möglich, die Anwesenheit von Personen und/oder Objekten, die einen solchen Sender und/oder Transponder mit sich führen, zu erfassen. Auch ist es möglich, entsprechende Bewegungsmuster zu erfassen. Auch kann sichergestellt werden, dass nur tatsächliche Personen, die einen solchen Sender und/oder Transponder tragen, erfasst werden, beispielsweise indem Bewegungsprofile und Abstände zwischen Transpondern und/oder Sendern ausgewertet werden. Dadurch kann beispielsweise verhindert werden, dass eine Person durch tragen von mehreren Identifikationssendern und/oder Transpondern als eine Mehrzahl von Personen erkannt wird. Das Fahrzeug weist insbesondere eine entsprechende Antenne und Sende- und/oder Empfangsmittel, um mit Identifikationstranspondern und/oder -sendern zu kommunizieren oder Signale von solchen zu empfangen und/oder Ortungsmittel auf, um Identifikationstransponder und/oder -sender zu lokalisieren.

Insbesondere kann das Verfahren so geführt werden, dass unterschiedliche Arten von Identifikationstranspondern und/oder Identifikationssendern erfasst und auch eine Information über die Art, beispielsweise eine Nummerierung oder eine Identifikation des jeweiligen Transponders und/oder Senders an den Hangar und/oder den Server übermittelt wird.

Mit besonderem Vorteil kann das Verfahren so ausgestaltet sein, dass das Fahrzeug eingerichtet ist zur Erkennung von Objekten, insbesondere von sich bewegenden und/oder lebenden Objekten und/oder insbesondere das Verfahren so gestaltet ist, dass das Fahrzeug ein erkanntes Objekt verfolgt. Dabei kann die Verfolgung insofern beschränkt sein, dass diese nur so lange erfolgt, wie sich das Objekt in einer vorbestimmten Fläche und/oder einem vorbestimmten Raum befindet. Das Verfahren kann dabei insbesondere auch so gestaltet sein, dass insbesondere durch das das Fahrzeug und/oder den Hangar, insbesondere auf Anforderung, der aktuelle Aufenthaltsort des Objektes übermittelt wird, beispielsweise an ein mobiles Gerät, einen Server und/oder den Hangar und/oder durch optische und/oder akustische Signalisierung.

Eine Verfolgung kann dabei durch Bewegung des Fahrzeuges und/oder der Kamera erfolgen. Das Verfahren kann dabei auch so geführt werden, dass das Fahrzeug bei einer Erkennung eines Objektes, insbesondere eines solchen, das seiner Art nach oder seiner Bewegung und/oder seiner Position nach vorbestimmten Kriterien entspricht, seinen Abstand zu diesem Objekt erhöht und/oder maximiert und das Objekt durch Erfassung mittels seiner Kamera verfolgt. Die Übermittlung des Aufenthaltsortes kann auch derart erfolgen, dass mit optischen Signalmitteln ein solcher Aufenthaltsort bekannt gegeben werden kann, beispielsweise durch Beleuchtung des Objektes durch das Fahrzeug.

Insbesondere ist das Verfahren dabei so ausgestaltet, dass bestimmte Objekte von der Erkennung ausgenommen sind bzw. eine Feind/Freund-Erkennung vorgenommen wird. Dies kann beispielsweise mittels entsprechender Identifikationssender und/oder Identifikationstransponder und/oder andere Identifikationsmittel die von Freunden mitgeführt werden, erfolgen.

Mit besonderem Vorteil wird das Verfahren so geführt, dass aus den vom Fahrzeug erfassten Informationen, insbesondere im Zeitverlauf dynamisch, Gefährdungsobjekte erkannt und/oder klassifiziert werden. Eine Klassifikation, insbesondere in Gefährdungsklassen, kann insbesondere anhand von Eigenschaften wie Ort, Bewegungsrichtung, Bewegungsgeschwindigkeit, zurückgelegtem Weg, Volumen, Höhenausdehnung und/oder Höhenlage des Objekts, Entfernung von anderen Objekten und insbesondere deren Klassifizierung und/oder Kongruenz der Bewegung mit der Bewegung anderer Objekte und insbesondere deren Klassifikation, erfolgen. Abhängig von der Klassifizierung können unterschiedliche Maßnahmen eingeleitet werden, beispielsweise eine Benachrichtigung, eine Alarmierung, akustische und/oder optische Alarme, Benachrichtigung unterschiedlicher Stellen, Abschaltung bestimmter Anlagen und/oder Vorgänge, Verriegelung und Absperrung von Objekten, beispielsweise mittels Schlössern, Türen und/oder Toren und/oder anderer Absperrvorrichtungen.

Bei den Informationen kann es sich beispielsweise um Geräusche, Gerüche, Bodenunebenheiten, Höhenprofile, Höhen von Objekten, Volumen von Objekten, Bewegungsgeschwindigkeiten und/oder Bewegungsrichtungen von Objekten, Wärmebild, optische Bildinformationen, insbesondere erfasst durch die Kamera, handeln.

Beispielsweise kann eine Klassifizierung auch anhand von Kombinationen einzelner Eigenschaften erfolgen. So kann beispielsweise ein Objekt mit der Form eines Menschen, dass sich mit einer ersten Geschwindigkeit bewegt anders klassifiziert werden, als ein Objekt mit der Form eines Menschen, dass sich mit einer zweiten Geschwindigkeit bewegt.

Beispielsweise kann das Erkennen eines rennenden Menschen genutzt werden, um eine Benachrichtigung, eine Alarmierung, akustische und/oder optische Alarme, Benachrichtigung unterschiedlicher Stellen, Abschaltung bestimmter Anlagen und/oder Vorgänge, Verriegelung und Absperrung von Objekten zu bewirken.

Dabei kann eine Klassifizierung im zeitlichen Verlauf dynamisch insbesondere derart erfolgen, dass einem Objekt zu einer ersten Zeit, insbesondere bei der Erkennung des Objekts, eine erste Gefährdungsklasse, insbesondere Abhängig von seinen Eigenschaften zugeordnet wird und die Gefährdungsklassifikation eines Objektes die weitere Klassifizierung des Objektes im zeitlichen Verlauf beeinflusst, beispielsweise Schwellenwerte abhängig von der bisherigen Klassifikation geändert werden.

Bei der Erkennung von Menschen können in die Klassifizierung auch Merkmale wie Farbe der Kleidung, maskiert oder unmaskiert, Hautfarbe und/oder Ethnotyp der Gesichtszüge einfließen.

Bei der Klassifizierung können auch Oberflächenmuster berücksichtigt werden, so kann das Verfahren beispielsweise das Erkennen von vorbekannten Mustern und deren Verwendung in der Klassifizierung beinhalten, wie beispielsweise das bekannte Gaunerzinken.

Mit besonderem Vorteil beinhaltet das Verfahren zur Überwachung, dass bei einem Betreten eines Geländes, Bauwerks und/oder einer Fläche, durch einen Menschen außerhalb einer vordefinierten Zeitspanne und/oder innerhalb einer vordefinierten Zeitspanne und/oder beim Vorliegen einer vorbestimmten Klassifizierung das Verlassen des Fahrzeuges aus dem Hanger bewirkt und insbesondere das Abfliegen einer vordefinierten Route bewirkt und werden dabei insbesondere Bilder erfasst. Das Betreten eines Geländes, Bauwerks und/oder einer Fläche kann beispielsweise durch das Betätigen eines Schlosses, eines Tores, einer Tür und/oder eines Fensters und/oder einer Sicherheitseinrichtung und/oder einen entsprechenden Melder, wie Bewegungsmelder, erkannt und/oder gemeldet werden.

Mit besonderem Vorteil beinhaltet das Verfahren zur Überwachung, das Zählen von Objekten, beispielsweise Autos, Containern und/der Paletten innerhalb eines vorbestimmten Gebietes, insbesondere einer Lagerfläche und das Bewirken einer Alarmierung, eines akustischen und/oder optischen Alarms, einer Benachrichtigung unterschiedlicher Stellen, einer Abschaltung bestimmter Anlagen und/oder Vorgänge, eine Verriegelung und Absperrung von Objekten, bei Abweichungen von einer Sollanzahl und/oder der zuvor gezählten Anzahl, insbesondere innerhalb oder außerhalb vorbestimmter Zeiten.

Mit besonderem Vorteil wird das Verfahren so geführt, dass aus von dem Fahrzeug erfassten Informationen bestimmt wird, ob bestimmte Objekte, beispielsweise Türen, Toren und/oder Fenster geschlossen und/oder verschlossen sind. Bei der Information kann es sich insbesondere um Geräusche und/oder Bildinformationen handeln.

Mit besonderem Vorteil beinhaltet das Verfahren das Abgeben eines akustischen Lageberichts, insbesondere über einen Lautsprecher am Fahrzeug, bei einem entsprechenden Kommando und/oder Erkennen eines vorbestimmten Zustandes. Insbesondere nähert sich die Drohne dazu vor Abgabe des Lageberichts einer Person, insbesondere auf 2 bis 3 m Entfernung, insbesondere in einer Flughöhe von 0,5 bis 3m. Ein Lagebericht kann beispielsweise die Angabe von Uhrzeiten und/oder erkannten Zuständen und/oder Klassifizierungen beinhalten.

Vor Abgabe eines Lageberichts kann das Verfahren, insbesondere über einen Lautsprecher am Fahrzeug, zur Angabe eines Passwortes oder -satzes auffordern und den Lagerbericht nur bei Angabe und/oder Erkennen, insbesondere mittels eines Mikrofons, insbesondere am Fahrzeug und/oder Hanger, eines vorbestimmten Passwortes oder -satzes abgeben.

Insbesondere kann das Verfahren die Rückkehr des Fahrzeuges nach Abgabe eines Lageberichtes und/oder der Entgegennahme eines vorbestimmten Passwortes oder -satzes zum Hanger oder einen Ort, an dem eine Abweichung erkannt und/oder ein klassifiziertes Objekt zuletzt wahrgenommen wurde, beinhalten.

Mit besonderem Vorteil weist das Fahrzeug eine Vorrichtung zur Markierung, insbesondere zum Versprühen von Markierungsmittel, beispielsweise Farbe, auf. Insbesondere beinhaltet das Verfahren zur Überwachung die Markierung von Personen und/oder Objekten, insbesondere durch Versprühen von Farbe vom Fahrzeug aus auf eine Person und/oder ein Objekt, beispielsweise ein solches, bezüglich dessen eine vorbestimmte Klassifizierungsschwelle überschritten wurde.

Mit besonderem Vorteil beinhaltet das Verfahren zur Überwachung und/oder das Verfahren zum Erstellen von Bildern das Anzeigen einer Karte auf einem elektrischen Gerät, wobei auf der Karte vordefinierte Punkte markiert sind und, wenn dies durch Anklicken mindestens eines der vordefinierten Punkte angefordert wird, das Ansteuern des Fahrzeuges der Art, dass es sich zu dem dem vordefinierten Punkt auf der Karte in der Realität entsprechenden Punkt begibt und dort Bilder erfasst und das Übermitteln der Bilder an das elektrische Gerät und insbesondere Anzeigen der Bilder auf dem elektrischen Gerät. Insbesondere wird vor dem Ansteuern des Fahrzeuges der Art, dass es sich zu dem dem vordefinierten Punkt auf der Karte in der Realität entsprechenden Punkt begibt, ein Verlassens des Fahrzeuges aus dem Hanger bewirkt.

Insbesondere entsprechen die vordefinierten Punkte auf der Karte in der Realität Loggingpunkten, insbesondere Deisterpunkten.

Mit besonderem Vorteil umfasst das Verfahren zur Überwachung und/oder das Verfahren zum Erstellen von Bildern, wenn es sich bei dem Fahrzeug um ein Wasserfahrzeug handelt, dass auch unter Wasser Bilder erfassen kann, das Erfassen von Bildern eines Rumpfes eines Wasserfahrzeuges, insbesondere der Art, dass von allen Teilen des Rumpfes, die sich unter Wasser befinden, mindestens ein Bild erfasst wird und insbesondere Vergleich der Bilder mit vorbestimmten und/oder bekannten und/oder gespeicherten Rumpfgeometrien und Bewirken und/oder Übermitteln einer Benachrichtigung und/oder eines Alarm, wenn die erfassten Bilder mit keiner der vorbestimmten und/oder der bekannten und/oder der gespeicherten Rumpfgeometrie in Übereinstimmung sind.

Mit besonderem Vorteil umfasst das Verfahren zur Überwachung und/oder das Verfahren zum Erstellen von Bildern das Erfassen von Bildern von Gewässeroberflächen und die Identifizierung von aus Schiffen auslaufenden Flüssigkeiten, insbesondere Ölen. Dazu werden insbesondere Bilder in unterschiedlichen Spektren, beispielsweise optisch und IR, erfasst und deren Informationen korreliert und an Schiffe angrenzende Flächen mit von der Umgebung abweichenden Eigenschaften, wie Farbe, Temperatur und/oder Helligkeit identifiziert und bei Erkennen solcher Flächen ein Auslaufen von Flüssigkeit angenommen und/oder eine Benachrichtigung und/oder ein Alarm bewirkt und/oder übermittelt.

Mit besonderem Vorteil werden in dem Verfahren zur Überwachung die von der Kamera erzeugten Bilder vor einer Übermittlung von dem Fahrzeug weg in Abhängigkeit von der Position des Fahrzeuges und/oder der Kamera und/oder der Orientierung des Fahrzeuges und/oder der Kamera bei der Aufnahme der Bilder so bereinigt werden, dass Bildinformationen von außerhalb einer vorbestimmten Fläche und/oder eines vorbestimmten Raums liegenden Objekten gelöscht werden.

Alternativ oder zusätzlich umfasst mit besonderem Vorteil in dem Verfahren zur Überwachung das Fahrzeug eine Vorrichtung zur Beschränkung des von der Kamers erfassten Bildbereichs aufweist und die Vorrichtung zur Beschränkung in Abhängigkeit von der Position des Fahrzeuges und/oder der Kamera und/oder der Orientierung des Fahrzeuges und/oder der Kamera gesteuert wird.

Die Aufgabe wird auch gelöst durch ein Verfahren zum Erstellen von Bildern mit einer an einem fernsteuerbaren Fahrzeug, insbesondere Luftfahrzeug, befestigten Kamera. Das Verfahren kann dabei insbesondere auf zwei unterschiedliche Arten durchgeführt werden, die auch kombiniert werden können. Zum einen können die von der Kamera erzeugten oder erfassten Bilder, insbesondere vor einer Übermittlung von dem Fahrzeug weg, in Abhängigkeit von der Position des Fahrzeuges und/oder der Kamera und/oder der Orientierung des Fahrzeuges und/oder der Kamera bei der Aufnahme der Bilder so bereinigt werden, dass Bildinformationen von außerhalb einer vorbestimmten Fläche und/oder eines vorbestimmten Raumes liegenden Objekten, insbesondere alle solcher, gelöscht werden. Dies kann insbesondere durch Bearbeitung mit einer entsprechenden Software erfolgen. Dazu weist das Fahrzeug insbesondere Mittel zur Bestimmung seiner Position und/oder seiner Orientierung und/oder der Position der Kamera auf. Insbesondere weist das Fahrzeug zur Ausführung der Software bzw. zur Bearbeitung der Bilder eine entsprechende CPU auf.

Ein Löschen kann dabei dadurch erfolgen, dass die entsprechenden Pixel verändert und die darin enthaltene Information unkenntlich gemacht wird, beispielsweise durch Schwärzen oder Einfärben in einer anderen Farbe der entsprechenden Bildbereiche.

Diese Bearbeitung der erzeugten Bilder bzw. erfassten Bilder, die insbesondere Videos darstellen, erfolgt insbesondere noch in dem Fahrzeug selbst bzw. in einer entsprechenden Vorrichtung des oder an dem Fahrzeug und/oder im Hangar. Nach der Bearbeitung werden die erzeugten Bilder insbesondere über Bilddatenübertragungsmittel, insbesondere drahtlos, von dem Fahrzeug und/oder dem Hangar weg, beispielsweise zu dem Hangar und/oder Server übertragen. Alternativ und/oder zusätzlich können die bearbeiteten Bilder auch in einer entsprechenden Speichervorrichtung des oder an dem Fahrzeug und/oder Hangar gespeichert werden. Mit besonderem Vorteil werden die Bilder in ihrem Originalzustand, also mit Bildinformationen von außerhalb einer vorbestimmten Fläche und/oder eines vorbestimmten Raumes liegenden Objekten, nicht dauerhaft gespeichert oder von dem Fahrzeug und/oder dem Hangar übermittelt. Unter einer dauerhaften Speicherung ist insbesondere jede Speicherung die nicht nur sehr kurzfristig, insbesondere nicht nur kürzer als 10 Sekunden, oder nicht zum Zwecke der Zwischenspeicherung und/oder Bearbeitung und/oder Übermittlung erfolgt.

In einer zweiten Alternative weist das Fahrzeug eine Vorrichtung zur Beschränkung des von der Kamera erfassten Bildbereiches auf und wird die Vorrichtung zur Beschränkung in Abhängigkeit von der Position des Fahrzeuges und/oder der Kamera und/oder der Orientierung des Fahrzeuges und/oder der Kamera gesteuert, insbesondere so, dass bei der Erfassung der Bilder Bildinformationen von außerhalb einer vorbestimmten Fläche und/oder eines vorbestimmten Raumes liegenden Objekten ausgeblendet werden, insbesondere keine Bildinformationen von außerhalb einer vorbestimmten Fläche und/oder eines vorbestimmten Raumes liegenden Objekten erfasst werden. Dazu weist das Fahrzeug insbesondere Positionsbestimmungsmittel und/oder Orientierungsbestimmungsmittel zur Bestimmung der Position und/oder Orientierung des Fahrzeuges und/oder der Kamera auf. So kann verhindert werden, dass entsprechende Informationen überhaupt erst erfasst werden. Dadurch kann höchstmöglicher Datenschutz gewährleistet werden. Bei einer solchen Vorrichtung zur Beschränkung kann es sich beispielsweise um mindestens eine bewegliche und/oder veränderliche Blende handeln, mit der der Strahlengang entsprechend beeinflusst wird, um Bildinformationen von außerhalb der vorbestimmten Fläche und/oder des vorbestimmten Raumes liegenden Objekten auszublenden und/oder unkenntlich zu machen. Dies ist beispielsweise durch mechanische Blenden, die beweglich und entsprechend ansteuerbar ausgebildet sind, möglich. Es ist jedoch auch denkbar, dass andere optische Mittel, insbesondere solche, deren Durchlässigkeit, insbesondere für optische Wellenlängen, durch Anlegen elektrischer Spannungen oder Potenziale derart verändert werden kann, dass sie an unterschiedlichen Bereichen unterschiedliche Durchlässigkeiten für optische Wellenlängen aufweisen. Dankbar sind hier beispielsweise Elemente, die auch zur Projektion von Bildinformationen, beispielsweise in Beamern eingesetzt werden.

Insbesondere wird die Vorrichtung zur Beschränkung in Abhängigkeit von der Position und/oder der Orientierung so gesteuert und/oder bewegt, dass der von der Kamera aufgenommene Bildbereich so mittels der mindestens einen Vorrichtung zur Beschränkung beschnitten und/oder beeinflusst wird, dass Bildinformationen von außerhalb einer vorbestimmten Fläche und/oder eines vorbestimmten Raumes liegenden Objekten ausgeblendet und/oder unkenntlich werden, insbesondere dass die Bilder der Kamera ausschließlich Bildinformationen aus der vorbestimmten Fläche und/oder dem vorbestimmten Raum enthalten.

Auch die erste Alternative der Verfahrensführung zur Erstellung von Bildern wird insbesondere derart ausgeführt, dass die erfassten Bilder derart bearbeitet werden, dass ausschließlich Bildinformationen aus der vorbestimmten Fläche und/oder dem vorbestimmten Raum enthalten sind und andere Bildinformationen vollständig gelöscht und/oder unkenntlich gemacht werden.

Mit besonderem Vorteil wird das Verfahren zur Überwachung derart durchgeführt, dass das Erfassen von Informationen das Erfassen von Bildern mit der Kamera umfasst und dass das Erfassen von Bildern unter Verwendung eines erfindungsgemäßen Verfahrens zum Erstellen von Bildern, wie soeben beschrieben, durchgeführt wird.

Die Aufgabe wird auch gelöst durch ein System aufweisend ein Fahrzeug, einen Hangar und mindestens einen vom Hangar und Fahrzeug losgelösten Sensor und insbesondere vom Hanger örtlich entfernten Sensor.

Vorzugsweise ist das Fahrzeug ein fernsteuerbares Fahrzeug, insbesondere Luftfahrzeug, insbesondere eine Drohne, aufweisend mindestens eine Kamera sowie mindestens ein Positionsbestimmungsmittel und/oder mindestens ein Orientierungserfassungsmittel zur Erfassung der Orientierung der Kamera und/oder des Fahrzeuges bzw. zur Erfassung der Position des Fahrzeuges und/oder der Kamera. Dabei weist das fernsteuerbare Fahrzeug eine Vorrichtung zur Beschränkung des von der Kamera erfassten Bildbereiches in Abhängigkeit von Daten des mindestens einen Positionsbestimmungsmittels und/oder des mindestens einen Orientierungserfassungsmittels auf, wobei die Vorrichtung zur Beschränkung insbesondere mindestens eine bewegliche Blende und/oder veränderliche Blende aufweist. Alternativ und/oder zusätzlich kann das Fahrzeug eine Vorrichtung zur Bearbeitung der von der Kamera erfassten Bilder, eingerichtet zum Bereinigen der Bilder in Abhängigkeit von Daten des mindestens einen Positionsbestimmungsmittels und/oder des mindestens einen Orientierungserfassungsmittels, insbesondere bei der Erfassung der Bilder und/oder vor dauerhafter Speicherung und/oder Übermittlung der Bilder so, dass Bildinformationen von außerhalb einer vorbestimmten Fläche und/oder eines vorbestimmten Raumes liegenden Objekten gelöscht und/oder unkenntlich gemacht werden und/oder dass die Bilder der Kamera ausschließlich Bildinformationen aus der vorbestimmten Fläche und/oder dem vorbestimmten Raum enthalten.

Dabei ist das Fahrzeug insbesondere eingerichtet zur Durchführung eines erfindungsgemäßen Verfahrens zur Herstellung von Bildern.

Insbesondere wird auch das Verfahren zur Überwachung unter Nutzung eines erfindungsgemäßen fernsteuerbaren Fahrzeuges durchgeführt.

Mit besonderem Vorteil kann das erfindungsgemäße fernsteuerbare Fahrzeug, sofern es sich um ein Luftfahrzeug, insbesondere um eine Drohne handelt, einen Fallschirm und insbesondere auch eine Vorrichtung zur Freigabe und/oder Auslösen des Fallschirmes aufweisen und insbesondere kann es eingerichtet sein, bei einem drohendem Absturz, insbesondere bei einer Fehlfunktion und/oder einer Kollision des Fahrzeuges den Fallschirm so freizugeben und/oder auszulösen, dass ein Fall des Fahrzeuges gebremst wird.

Dadurch lässt sich wertvolle Zeit vor einem Aufprall des Fahrzeuges gewinnen, in der Bilder und/oder andere Informationen, die das Fahrzeug gewonnen hat, bearbeitet und/oder übermittelt werden können, insbesondere über eine drahtlose Funkverbindung übermittelt werden können. Auch wenn bei üblichen Flughöhen durch einen entsprechenden Fallschirm nur geringe Verlängerungen von Fallzeiten erreicht werden können, kann dies zu wesentlichem Informationsgewinn führen. Die Verlängerung der Fallzeit kann auch dazu dienen, weitere Bilder und/oder andere Informationen zu erfassen und zu verarbeiten und/oder zu übermitteln. Dadurch können ggf. wertvolle Informationen gewonnen werden. Alternativ oder zusätzlich zum Fallschirm kann auch eine andersartige Fallgeschwindigkeitsreduzierungsvorrichtung vorgesehen und/oder entsprechend zur Fallzeitverlängerung , bei einem drohendem Absturz, insbesondere bei einer Fehlfunktion und/oder einer Kollision des Fahrzeuges verwendet werden und das Fahrzeug entsprechend eingerichtet sein.

Mit besonderem Vorteil weist das erfindungsgemäße Fahrzeug eine Steuereinrichtung auf, die eingerichtet ist, die Vorrichtung zur Beschränkung in Abhängigkeit von Daten des mindestens einen Positionsbestimmungsmittels und/oder Orientierungserfassungsmittels so anzusteuern, dass Bildinformationen von außerhalb einer vorbestimmten Fläche und/oder eines vorbestimmten Raumes liegenden Objekten ausgeblendet und/oder unkenntlich gemacht werden und/oder dass der von der Kamera aufgenommene Bildbereiche so mittels der mindestens einen Blende beschnitten und/oder unkenntlich gemacht werden und/oder verändert werden, dass die Bilder der Kamera ausschließlich Bildinformationen aus der vorbestimmten Fläche oder dem vorbestimmten Raum enthalten.

Mit besonderem Vorteil weist das erfindungsgemäße Fahrzeug einen Speicher auf, auf dem die vorbestimmte Fläche und/oder der vorbestimmte Raum gespeichert ist und ist insbesondere die Steuerung des Fahrzeuges so eingerichtet, auf den Speicher zum Auslesen der vorbestimmten Fläche und/oder des vorbestimmten Raumes zuzugreifen und die weitere Steuerung basierend auf diesen Daten vorzunehmen bzw. ein erfindungsgemäßes Verfahren zur Erstellung von Bildern auf diesen Daten basieren zu lassen. Der Speicher kann auch weitere Daten beinhalten, beispielsweise Referenzen zum Abgleich mit gewonnenen Informationen, wie beispielsweise Höhenprofile der vorbestimmten Fläche oder des vorbestimmten Raumes.

Mit besonderem Vorteil weist das erfindungsgemäße Fahrzeug Mittel zur Umgebungsüberwachung, insbesondere Luftraumüberwachung, auf.

Mit besonderem Vorteil weist das erfindungsgemäße Fahrzeug Mittel zur Kommunikation mit Logingpunkten bei und/oder nach einer Annäherung des Fahrzeuges an einen Logingpunkt an. Insbesondere ist es zur Erfassung und Dokumentation der Annäherung an Loggingpunkte eingerichtet. Insbesondere handelt es sich bei den Logingpunkten um Deisterpunkte.

Das erfindungsgemäße Fahrzeug und/oder das erfindungsgemäße Verfahren zur Überwachung sind insbesondere so ausgebildet, dass das Fahrzeug so eingerichtet ist bzw. das Verfahren so durchgeführt wird, dass das Fahrzeug, sofern es ein Luftfahrzeug ist, nur an einem vorbestimmten Platz und/oder auf und/oder in einer vorbestimmten Aufnahmevorrichtung, insbesondere Hanger, landet und/oder landen kann beziehungsweise nur an/über einer/m solchen seine Flughöhe unter eine vorbestimmte Untergrenze, insbesondere von mindestens 3m, reduziert und/oder reduzieren kann.

Das erfindungsgemäße Fahrzeug, sofern es sich um ein Luftfahrzeug handelt, weist insbesondere ein Notlandesystem auf, dass eine Landung im Notfall, beispielsweise bei einer Fehlfunktion, so ermöglicht, dass Schäden am Fahrzeug und/oder der Umgebung möglichst gering gehalten werden. Dazu weist das Fahrzeug insbesondere einen Fallschirm und/oder mindestens einen Airbag, insbesondere einen solchen, der im aufgeblasenen Zustand das Fahrzeug von allen Seiten bei einem Aufprall schützt und/oder es von allen Seiten umgibt, auf. Das Verfahren ist dabei insbesondere so eingerichtet dass der Fallschirm und/oder Airbag bei einer Fehlfunktion, die einen Absturz bedingen kann und/oder einem Höhenverlust, der ein vorbestimmtes Maß, beispielsweise in Form einer Flughöhe, ggf. ortsabhängig und/oder einer Sinkrate, übersteigt, ausgelöst werden.

Das erfindungsgemäße Fahrzeug weist vorteilhafterweise einen Peilsender auf, der insbesondere bei einer Fehlfunktion und/oder einem Absturz und/oder beim Aktivieren eines Notlandesystems, beispielsweise von Airbags und/oder eines Fallschirms, aktiviert wird und insbesondere das Auffinden des Fahrzeuges erleichtert.

Insbesondere weist das erfindungsgemäße Fahrzeug eine Vorrichtung zum Versprühen von Gas, Aerosolen und/oder Flüssigkeiten, beispielsweise in Form von Pfefferspray und/oder CS-Gas, färbende, selbstleuchtende, reflektierende und/oder fluoreszierende Substanz auf, auf. Dazu weist das Fahrzeug insbesondere einen Vorratsbehälter, insbesondere für unter Druck stehende Gase und/oder Flüssigkeiten, insbesondere beinhaltend und/oder zumindest teilweise gefüllt mit CS-Gas, künstlicher DNA, markierenden, färbende, selbstleuchtende, klebender, reflektierende und/oder fluoreszierende Substanz, und eine Versprühvorrichtung auf.

Das Verfahren zur Überwachung ist insbesondere so ausgebildet, das ein erkanntes Objekt mit vorgegebenen Eigenschaften oder einer vorgegebenen Klassifizierung, insbesondere bei Erkennung einer, insbesondere unbefugten und/oder nicht authentifizierten Person und/oder andere, insbesondere unbefugte und/oder nicht authentifizierten, Fahrzeuge, das Fahrzeug das Objekt mit Gas, künstlicher DNA, Aerosol und/oder Flüssigkeit, CS-Gas und/oder klebender, markierender, färbender, selbstleuchtender, reflektierende und/oder fluoreszierende Substanz besprüht. So kann beispielsweise eine Objekt, beispielsweise eine Person, abgeschreckt und/oder zur späteren Identifizierung markiert werden. Auch kann beispielsweise eine Kameralinse mit sichtbeeinträchtigendem, beispielsweise färbendem Material besprüht werden.

Insbesondere weist das erfindungsgemäße Fahrzeug eine Vorrichtung zum Aussenden eines Seiles und/oder Netzes, beispielsweise zum Fangen und/oder zur Störung der Flugfähigkeit eines anderen Fahrzeuges auf. Das Verfahren zur Überwachung ist insbesondere so ausgebildet, das ein erkanntes Objekt mit vorgegebenen Eigenschaften oder einer vorgegebenen Klassifizierung, insbesondere bei Erkennung einer, insbesondere unbefugten und/oder nicht authentifizierten Person und/oder andere, insbesondere unbefugte und/oder nicht authentifizierten, Fahrzeuge, das Fahrzeug ein Seil und/oder Netz in Richtung des Objektes aussendet, beispielsweise zum Fangen und/oder zur Störung der Flugfähigkeit.

Der erfindungsgemäße Hangar ist vorzugsweise ein, insbesondere mobiler, Hangar zur umschließenden Aufnahme eines fernsteuerbaren Fahrzeuges, insbesondere eines erfindungsgemäßen fernsteuerbaren Fahrzeuges. Dabei weist der Hangar Kommunikationsmittel zur Kommunikation, insbesondere kabelgebundenen Kommunikation, mit einem entfernten Benutzer und/oder Server und, insbesondere funkbasierten Kommunikation, mit Kommunikationsmitteln des Fahrzeuges auf. Dabei ist der Hangar insbesondere zur automatischen Ladung eines im Fahrzeug befindlichen Akkus, insbesondere wenn das Fahrzeug im Hangar aufgenommen ist, eingerichtet. Der Hangar ist desweiteren eingerichtet zur selbstständigen Öffnung und Freigabe des Fahrzeuges. Dies kann beispielsweise durch Bewegen eines Deckels, einer Klappe, einer Abdeckung oder ähnlichen Elementen, beispielsweise durch Verschieben und/oder Verschwenken erfolgen. Desweiteren ist der Hangar eingerichtet, das Fahrzeug aufgrund eines durch und/oder mittels mindestens eines Sensors erfassten Zustandes und/oder Ereignisses freizugeben und insbesondere das Fahrzeug zum Verlassen des Hangars und/oder zum Zurücklegen einer vorbestimmten Route und insbesondere zum Erfassen von Informationen, insbesondere Bildern, beim Zurücklegen der vorbestimmten Route zu veranlassen. Vorzugsweise ist der Hangar eingerichtet, das Fahrzeug bei Empfang einer entsprechenden Anweisung eines entfernten Benutzers und/oder Servers und/oder zu einer vorbestimmten Zeit und/oder nach Ablauf einer vorbestimmten freizugeben und insbesondere das Fahrzeug zum Verlassen des Hangars und/oder zum Zurücklegen einer vorbestimmten Route und insbesondere zum Erfassen von Informationen, insbesondere Bildern, beim Zurücklegen der vorbestimmten Route zu veranlassen.

Dabei gilt insbesondere in Bezug auf die Routen und Informationen, Veranlassung und Steuerung oben ausgeführtes.

Insbesondere ist der vom Hangar und Fahrzeug losgelöste Sensor mit dem Hanger gekoppelt, insbesondere per Funkverbindung und/oder Kabel, und/oder weist der Hanger insbesondere eine Steuerungseinheit auf und ist der vom Hangar und Fahrzeug losgelöste Sensor mit der Steuerungseinheit so gekoppelt, dass die Steuerungseinheit Signale vom Sensor erhält und/oder ist die Steuerungseinheit so ausgebildet, dass sie den Hanger veranlassen kann, das Fahrzeug freizugeben und das Fahrzeug veranlassen kann den Hangar zu verlassen und eine, insbesondere vorbestimmte, Route zurückzulegen und insbesondere beim Zurücklegen der Route Informationen, insbesondere Bilder mit der Kamera, zuerfassen. Insbesondere ist die Steuerungseinheit so ausgebildet, dass sie den Hanger und das Fahrzeug veranlasst bei Eintritt des durch den oder mittels des mindestens einen vom Hangar und Fahrzeug losgelösten Sensor erfassten Zustandes und/oder Ereignisses, wobei die Steuerungseinheit insbesondere eingerichtet ist, Signale vom Sensor zu verarbeiten und insbesondere eingerichtet ist, den Eintritt des Zustandes und/oder Ereignisses festzustellen. Insbesondere ist die Steuerungseinheit im Hanger angeordnet und/oder ist der Hanger eingerichtet ist, das Fahrzeug vollständig zu umschließen. Insbesondere ist die Steuerungseinheit eingerichtet zur Durchführung mindestens eines erfindungsgemäßen Verfahrens.

Insbesondere weist der Hanger eine maximale Erstreckung in jede Raumrichtung von weniger als 1,5 m, insbesondere von weniger als 1 m, auf.

Mit besonderem Vorteil wird auch das Verfahren zur Überwachung unter Verwendung eines erfindungsgemäßen Hangars durchgeführt. Insbesondere wird das Verfahren zur Überwachung auch unter Verwendung eines erfindungsgemäßen Verfahrens zum Erstellen von Bildern durchgeführt.

Insbesondere ist der erfindungsgemäße Hangar ausgebildet, um mit einem Bauwerk und/oder einem Gegenstand lösbar fest verbunden zu werden. Insbesondere ist der Hangar eingerichtet, sein Äußeres mit einer Hochspannung zu beaufschlagen. Insbesondere weist der Hangar eine netzunabhängige Notstromversorgung und/oder einen Anschluss zum Anschluss an ein Stromnetz auf. Insbesondere weist der Hangar mindestens eine Kamera zur Aufnahme von Bildern seines Außenraumes und/oder seines Innenraumes zur Aufnahme des Fahrzeuges auf. Insbesondere weist der Hangar einen Kommunikationsanschluss zum Anschluss einer kabelgebundenen Kommunikationsverbindung auf. Mit besonderem Vorteil weist der Hangar optische und/oder akustische Signalisierungsvorrichtungen auf, beispielsweise ein Gobo, eine Sirene, einen Lautsprecher und/oder ein Lauflicht und/oder ein rotierendes Licht. Insbesondere ist der Hangar eingerichtet, Steueranweisungen entgegenzunehmen, insbesondere über eine kabelgebundene Kommunikationseinrichtung und Steueranweisungen an ein fernsteuerbares Fahrzeug, insbesondere ein erfindungsgemäßes fernsteuerbares Fahrzeug abzusetzen und/oder weiterzuleiten, insbesondere drahtlos. Auch ist der Hangar insbesondere eingerichtet, Informationen von einem fernsteuerbaren Fahrzeug, insbesondere drahtlos, zu empfangen und, insbesondere über eine drahtgebundene Kommunikationsvorrichtung, insbesondere an einen Server, weiterzuleiten.

Insbesondere weist der Hangar eine kabelgebundene Verbindung zu einer Mehrzahl von Antennen auf, die insbesondere voneinander beabstandet angeordnet sind. Insbesondere ist er eingerichtet, mittels dieser Antennen über eine mindestens von einer dieser Antenne ausgehende und/oder eingehende Kommunikationsverbindung mit dem fernsteuerbaren Fahrzeug zu kommunizieren, insbesondere dieses zu steuern und/oder Informationen vom fernsteuerbaren Fahrzeug entgegenzunehmen. Insbesondere ist er eingerichtet, über mindestens eine andere dieser Antennen als die mindestens eine der Antenne, die zeitgleich für die Kommunikationsverbindung mit dem fernsteuerbaren Fahrzeug genutzt wird, Störsignale abzugeben.

Insbesondere ist der Hangar eingerichtet, einen Verschleiß des fernsteuerbaren Fahrzeuges oder dessen Teile zu erkennen und/oder zu bewerten und/oder für ein solches Erkennen und/oder Bewerten ausreichende Bilder des Fahrzeuges zu fertigen, wenn das Fahrzeug in ihm aufgenommen ist, insbesondere unter Verwendung einer in den Innenraum gerichteten Kamera. So ist er insbesondere eingerichtet, Verschleißerscheinungen an Antriebselementen, insbesondere an Rotoren zu erkennen.

Insbesondere ist der mobile Hangar mit einer Klimatisierungsvorrichtung zur Klimatisierung seines Innenraumes oder Teilen seines Innenraumes, insbesondere einem Teil des Innenraumes, in dem das fernsteuerbare Fahrzeug aufnehmbar ist, eingerichtet.

Mit besonderem Vorteil ist der Hangar mobil, insbesondere tragbar, ausgestaltet.

Insbesondere ist der Hangar zur Säuberung eines in ihm aufgenommen fernsteuerbaren Fahrzeuges eingerichtet, insbesondere weist er zu diesem Zweck mindestens eine Wasserdüse und insbesondere einen Wasserablauf auf.

Mit besonderem Vorteil weist der Hangar mindestens einen Störsender zur Abgabe von Störsignalen auf, insbesondere ist er kabelgebunden mit einer Vielzahl von Antennen verbunden, über die er Störsignale abgeben kann und ist er entsprechend zur Abgabe solcher Störsignale eingerichtet. Dabei ist er insbesondere so eingerichtet, die Störsignale so bzw. über eine solchen Auswahl von mit ihm verbundenen Antennen, abzugeben, dass die Kommunikations- und Datenübertragungsverbindung zum fernsteuerbaren Fahrzeug möglichst wenig beeinträchtigt wird. Dabei ist er insbesondere so eingerichtet, dass Steueranweisungen an das fernsteuerbare Fahrzeug mit einer anderen räumlichen Verteilung abgestrahlt werden, als die Störsignale. Mit besonderem Vorteil ist der Hangar mit einer Luftraumüberwachung eingerichtet, die es ihm ermöglicht, Objekte im Luftraum zu erkennen und insbesondere bei der Erkennung von Objekten im Lauftraum Störsignale abzugeben.

Mit Vorteil weist der Hanger Sensoren auf, um das Annähern von Personen und/oder Objekten und/der die Manipulation am Hanger zu erfassen. Insbesondere weist der Hanger mindestens eine Alarmierungsvorrichtung auf, beispielsweise eine Sirene, eine Licht und/oder eine Kommunikationsvorrichtung zur Übermittlung eines Alarms, und ist er so eingerichtet, beim Annähern von Personen und/oder Objekten an den Hanger und/der bei einer Manipulation am Hanger einen optischen, akustischen und/oder elektronischen Alarm (beispielsweise eine als Meldung an einen Server und/oder Endgerät) abzusetzen.

Gelöst wird die Aufgabe auch durch ein System aufweisend ein erfindungsgemäßes Fahrzeug und einen erfindungsgemäßen Hangar, insbesondere unter Einsatz mindestens eins erfindungsgemäßen Verfahrens zur Überwachung und/oder Erstellung von Bildern.

Bezüglich eines weiteren Aspekts wird die Aufgabe gelöst durch ein fernsteuerbares Reinigungsmittelauftragungsluftfahrzeug, insbesondere unbemanntes Fahrzeug, insbesondere eine Drohne, insbesondere propellerbetrieben, das eine Vorrichtung zum Auftragen von Reinigungsmitteln, insbesondere zum Versprühen von Reinigungsmitteln aufweist, insbesondere eine Düse zum Versprühen von Reinigungsmitteln und die einen Vorratstank zur Mitführung von Reinigungsmittel, insbesondere unter Überdruck und/oder einen Schlauch zur Zuführung von Reinigungsmittel aufweist. Gelöst wird dieser Aspekt der Aufgabe auch durch ein Verfahren zum Auftragen von Reinigungsmittel auf eine Fläche mittels eines fernsteuerbaren Luftfahrzeugs, insbesondere unbemannten Fahrzeugs, insbesondere einer Drohne, insbesondere propellerbetrieben, insbesondere wie zuvor beschriebenes Reinigungsmittelauftragungsluftfahrzeug, bei dem das Fahrzeug in einer vorbestimmten Abstandsspanne, insbesondere innerhalb eines Abstandes von 10cm bis 2m, insbesondere mit einer Größe der Spanne von weniger als 50cm, von der Fläche an dieser Fläche entlang fährt und Reinigungsmittel aufträgt, insbesondere aufsprüht.

Bezüglich eines weiteren Aspekts wird die Aufgabe gelöst durch ein fernsteuerbares Reinigungsluftfahrzeug, insbesondere unbemanntes Fahrzeug, insbesondere eine Drohne, insbesondere propellerbetrieben, insbesondere eine erfindungsgemäßes Reinigungsmittelauftragungsluftfahrzeug, das eine Vorrichtung zum Aufnehmen von Flüssigkeit, insbesondere aufweisend einen Abstreifer und/oder eine Absaugvorrichtung für Flüssigkeiten, insbesondere an einem Aktuator angebracht, aufweist und insbesondere die einen Vorratstank zur Lagerung von aufgenommener Flüssigkeit und/oder einen Schlauch zur Abführung von aufgenommener Flüssigkeit aufweist. Gelöst wird dieser Aspekt der Aufgabe auch durch ein Verfahren zum Reinigen einer Fläche mittels eines fernsteuerbaren Luftfahrzeugs, insbesondere unbemannten Fahrzeugs, insbesondere einer Drohne, insbesondere propellerbetrieben, insbesondere wie zuvor beschriebenes Reinigungsluftfahrzeug, bei dem das Fahrzeug in einer vorbestimmten Abstandsspanne, insbesondere innerhalb eines Abstandes von 0cm bis 50cm, insbesondere mit einer Größe der Spanne von weniger als 50cm, von der Fläche an dieser Fläche entlang fährt und Flüssigkeit von der Fläche aufnimmt, dazu weist es insbesondere einen Aktuator auf, der ein Aufnahmemittel, insbesondere einen Abstreifer und/oder eine Absaugdüse, führt, wobei das Verfahren das Ansteuern des Aktuators derart, dass das Aufnahmemittel auf die Fläche aufgedrückt wird, mit Kontakt zu dieser geführt und/oder in einem Abstand von weniger als 5mm zur Fläche geführt wird.

Bezüglich eines weiteren Aspekts wird die Aufgabe gelöst durch ein fernsteuerbares Trocknungsluftfahrzeug, insbesondere unbemanntes Fahrzeug, insbesondere eine Drohne, insbesondere propellerbetrieben, insbesondere eine erfindungsgemäßes Reinigungsluftfahrzeug, das eine Vorrichtung zum Aufblasen von heißem und/oder trockenem Gas, aufweist und insbesondere die einen Vorratstank zur Lagerung von trockenem Gas und/oder einen Schlauch zur Zuführung von heißem und/oder trockenem Gas und/oder eine Vorrichtung zum Erhitzen und/oder Trocknen von Gas und insbesondere einen Ventilator aufweist. Gelöst wird dieser Aspekt der Aufgabe auch durch ein Verfahren zum Trocknen einer Fläche mittels eines fernsteuerbaren Luftfahrzeugs, insbesondere unbemannten Fahrzeugs, insbesondere einer Drohne, insbesondere propellerbetrieben, insbesondere wie zuvor beschriebenes Trocknungsluftfahrzeug, bei dem das Fahrzeug in einer vorbestimmten Abstandsspanne, insbesondere innerhalb eines Abstandes von 10cm bis 1m, insbesondere mit einer Größe der Spanne von weniger als 50cm, von der Fläche an dieser Fläche entlang fährt und Gas, das trockener und/oder heißer als die Umgebungsluft ist, auf die Fläche aufbläst.

Bezüglich eines weiteren Aspekts wird die Aufgabe gelöst durch ein fernsteuerbares Auftragungsluftfahrzeug, insbesondere unbemanntes Fahrzeug, insbesondere eine Drohne, insbesondere propellerbetrieben, das eine Vorrichtung zum Auftragen von Pulver, Flüssigkeiten und/oder Gasen und/oder Flüssigkeits-Gas-Mischungen und/oder Pulver-Gas-Mischungen, insbesondere von Farben und/oder Beschichtungen, aufweist, insbesondere eine Düse zum Versprühen von Flüssigkeiten unter Verwendung von unter Druck stehenden Gasen, insbesondere ein Spritzpistole und/oder Lackierpistole. Das Auftragungsluftfahrzeug weist insbesondere einen Vorratsbehälter für Farbe und/oder Beschichtung insbesondere in flüssigem und/oder pulverförmigen Zustand auf und/oder einen Vorratsbehälter für unter Überdruck stehendes Gas und/oder einen Schlauch zur Zuführung von Gas, Pulver und/oder Flüssigkeit und/oder Gemischen davon. Das Auftragungsluftfahrzeug weist insbesondere ein erstes elektrisch leitendes Kabel zur Verbindung mit einer Fläche auf, auf die das Auftragungsluftfahrzeug Pulver, Flüssigkeiten und/oder Gasen und/oder Flüssigkeits-Gas-Mischungen und/oder Pulver-Gas-Mischungen auftragen soll. Das Auftragungsluftfahrzeug weist insbesondere eine von ihm räumlich trennbare und/oder getrennte Basistation auf, und ein erstes elektrisch leitendes Kabel, das eine elektrische Verbindung zwischen Basisstation und Auftragungsluftfahrzeug herstellt. Insbesondere weist die Basisstation eine Kontaktierungsvorrichtung zum Anschluss eines zweiten elektrisch leitenden Kabels auf, die mit dem elektrisch leitenden Kabel elektrisch leitend gekoppelt ist. Die Basisstation und/oder Auftragungsluftfahrzeug weist insbesondere eine Aufwickelvorrichtung für das erste elektrische Kabel auf.

Gelöst wird dieser Aspekt der Aufgabe auch durch ein Verfahren zum Auftragen von Farben und/oder Beschichtungen auf eine Fläche mittels eines fernsteuerbaren Luftfahrzeugs, insbesondere unbemannten Fahrzeugs, insbesondere einer Drohne, insbesondere propellerbetrieben, insbesondere wie zuvor beschriebenes Auftragungsluftfahrzeug, bei dem das Fahrzeug in einer vorbestimmten Abstandsspanne, insbesondere innerhalb eines Abstandes von 10cm bis 2m, insbesondere mit einer Größe der Spanne von weniger als 50cm, von der Fläche an dieser Fläche entlang fährt und Gas, Pulver und/oder Flüssigkeit und/oder Gemischen davon aufträgt, insbesondere aufsprüht. Wenn es sich beider Fläche um eine elektrisch leitende Fläche handelt, beinhaltet das Verfahren beinhaltet insbesondere die Herstellung einer elektrisch leitenden Verbindung zwischen Luftfahrzeug, insbesondere einer Vorrichtung zum Auftragen von Pulver, Flüssigkeiten und/oder Gasen und/oder Flüssigkeits-Gas-Mischungen und/oder Pulver-Gas-Mischungen des Luftfahrzeuges und der Fläche vor dem Auftragen und/oder Aufrechterhalten einer elektrisch leitenden Verbindung zwischen Luftfahrzeug, insbesondere einer Vorrichtung zum Auftragen und der Fläche.

## Patentansprüche

1. Verfahren zur Überwachung mittels eines fernsteuerbaren Fahrzeugs, insbesondere Luftfahrzeug, aufweisend Positionsbestimmungsmittel, Bilddatenübertragungsmittel, mindestens eine Kamera,und Kommunikationsmittel zur Entgegennahme von Steueranweisungen sowie mittels eines Hangars zur umschließenden Aufnahme des Fahrzeuges, wobei der Hangar Kommunikationsmittel zur Kommunikation mit einem entfernten Benutzer und/oder Server und mit den Kommunikationsmitteln des Fahrzeugs aufweist und wobei der Hangar und das Fahrzeug zur, insbesondere automatischen, Ladung eines im Fahrzeug befindlichen Akkus eingerichtet sind, wenn das Fahrzeug im Hangar aufgenommen ist und wobei der Hangar eingerichtet ist zur selbstständigen Öffnung und Freigabe des Fahrzeuges und **dadurch gekennzeichnet, dass** bei Eintritt eines durch oder mittels mindestens einen vom Hanger losgelösten Sensor erfassten Zustandes und/oder Ereignisses der Hangar das Fahrzeug freigibt oder veranlasst wird, das Fahrzeug freizugeben, und das Fahrzeug den Hangar verlässt und eine vorbestimmte Route zurücklegt und beim Zurücklegen der Route Informationen, insbesondere Bilder mit der Kamera, erfasst.

2. Verfahren nach Anspruch 1, wobei es sich bei dem erfassten Zustand oder Ereignis um die Auslösung eines Bewegungssensors und/oder eines andersartigen Kontaktes, ein Geräusch und/oder andere durch den Sensor erfassbare Zustände oder Ereignisse handelt.

3. Verfahren nach einem der vorstehenden Ansprüche, wobei die vorbestimmte Route in Abhängigkeit des Zustandes oder Ereignisses und/oder des den Zustand oder das Ereignis erfassenden und/oder den auslösenden und/oder den erkennenden Sensor ausgewählt wird, insbesondere so, dass die Informationen Informationen aus dem Erfassungsgebiet des erkennenden Sensors beinhalten und/oder die Kamera Bilder aus dem Erfassungsgebiet des erkennenden Sensors aufnehmen kann und insbesondere wird das Verfahren so geführt, dass die Kamera Bilder aus dem Erfassungsgebiet des erkennenden Sensors erfasst.

4. Verfahren nach einem der vorstehenden Ansprüche, wobei das Fahrzeug die vorbestimmte Route selbstständig und/oder vollautomatisch gesteuert und/oder auch durch Zusammenwirken mit anderen Mitteln, beispielsweise dem Hangar und/oder einer im Hangar befindlichen Steuerung und/oder anderen Steuerungen, zurücklegt, insbesondere ohne Steuerungs- und/oder Regelanweisungen von außerhalb des Fahrzeuges und/oder des Hangers.

5. Verfahren nach einem der vorstehenden Ansprüche, wobei das Fahrzeug den Hangar auf Veranlassung des Hangars verlässt, wobei insbesondere der Hangar mit seinen Kommunikationsmitteln mit den Kommunikationsmitteln des Fahrzeuges und/oder über andere Kommunikationswege mit dem Fahrzeug kommuniziert, um das Fahrzeug zum Verlassen des Hangars zu veranlassen, wobei vorzugsweise diese Veranlassung allein durch eine entsprechende Anweisung zum Verlassen und/oder auch mit der Übermittlung der zu wählenden oder einer vorbestimmten Route erfolgt, wobei insbesondere das Fahrzeug durch den Hangar vollständig und/oder teilweise gesteuert und/oder gelenkt wird.

6. Verfahren nach einem der vorstehenden Ansprüche, wobei die vorbestimmte Route einen Punkt umfasst, von dem aus die mindestens eine Kamera des Fahrzeuges zumindest einen Teil, insbesondere den von dem Sensor, der das Ereignis und/oder den Zustand, der/das das Freigeben des Fahrzeuges und das Verlassen des Hangars bewirkt hat, erfasst hat oder an dessen Erfassung und/oder Erkennung mitgewirkt har, erfassten Bereich einsehen kann und/oder den Sensor sehen kann.

7. Verfahren nach einem der vorstehenden Ansprüche, wobei sich das Fahrzeug beim Zurücklegen der vorbestimmten Route nacheinander einer Mehrzahl von Logingpunkten nähert und die Annäherung des Fahrzeuges an die Logingpunkt erfasst und gespeichert wird, wobei es sich bei den Logingpunkten insbesondere um Deisterpunkte handelt.

8. Verfahren nach einem der vorstehenden Ansprüche, wobei
die von der Kamera erzeugten Bilder vor einer Übermittlung von dem Fahrzeug weg in Abhängigkeit von der Position des Fahrzeuges und/oder der Kamera und/oder der Orientierung des Fahrzeuges und/oder der Kamera bei der Aufnahme der Bilder so bereinigt werden, dass Bildinformation von außerhalb einer vorbestimmten Fläche und/oder eines vorbestimmten Raums liegenden Objekten gelöscht werden
und/oder
das Fahrzeug eine Vorrichtung zur Beschränkung des von der Kamers erfassten Bildbereichs aufweist und die Vorrichtung zur Beschränkung in Abhängigkeit von der Position des Fahrzeuges und/oder der Kamera und/oder der Orientierung des Fahrzeuges und/oder der Kamera gesteuert wird.

9. Verfahren nach dem vorstehenden Anspruch, wobei die Vorrichtung zur Beschränkung in Abhängigkeit von der Position und/oder der Orientierung so gesteuert und/oder bewegt wird, dass der von der Kamera aufgenommene Bildbereich so mittels der die Vorrichtung zur Beschränkung beschnitten wird, dass Bildinformation von außerhalb einer vorbestimmten Fläche und/oder eines vorbestimmten Raums liegenden Objekten ausgeblendet werden, insbesondere dass die Bilder der Kamera ausschließlich Bildinformation aus der vorbestimmten Fläche und/oder dem vorbestimmten Raum enthalten.

10. System aufweisend ein Fahrzeug, einen Hangar und mindestens einen vom Hangar und Fahrzeug losgelösten Sensor, wobei das Fahrzeug und der Hangar jeweils mindestens ein Kommunikationsmittel aufweisen, insbesondere zur drahtlosen Kommunikation miteinander, und wobei das Fahrzeug insbesondere mindestens eine Kamera aufweist, wobei der Hangar eingerichtet ist, das Fahrzeug aufzunehmen und freizugeben, **dadurch gekennzeichnet, dass** das System so eingerichtet ist, insbesondere der Hangar und das Fahrzeug so eingerichtet sind, , dass aufgrund eines durch den oder mittels des mindestens einen vom Hangar und Fahrzeug losgelösten Sensor erfassten Zustandes und/oder Ereignisses der Hangar das Fahrzeug freigibt und das Fahrzeug den Hangar verlässt und eine vorbestimmte Route zurücklegt und beim Zurücklegen der Route Informationen, insbesondere Bilder mit der Kamera, erfasst.

11. System nach Anspruch 10, wobei der vom Hangar und Fahrzeug losgelöste Sensor mit dem Hanger gekoppelt ist, insbesondere per Funkverbindung und/oder Kabel, und/oder der Hanger insbesondere eine Steuerungseinheit aufweist und der vom Hangar und Fahrzeug losgelöste Sensor mit der Steuerungseinheit so gekoppelt ist, dass die Steuerungseinheit Signale vom Sensor erhält und die Steuerungseinheit so ausgebildet ist, dass sie den Hanger veranlassen kann, das Fahrzeug freizugeben und das Fahrzeug veranlassen kann den Hangar zu verlassen und eine, insbesondere vorbestimmte, Route zurückzulegen und insbesondere beim Zurücklegen der Route Informationen, insbesondere Bilder mit der Kamera, zuerfassen, insbesondere bei Eintritt des durch den oder mittels des mindestens einen vom Hangar und Fahrzeug losgelösten Sensor erfassten Zustandes und/oder Ereignisses, wobei die Steuerungseinheit insbesondere eingerichtet ist, Signale vom Sensor zu verarbeiten und insbesondere eingerichtet ist, den Eintritt des Zustandes und/oder Ereignisses festzustellen und/oder wobei die Steuerungseinheit im Hanger angeordnet ist und der Hanger eingerichtet ist, das Fahrzeug vollständig zu umschließen.

12. System nach Anspruch 10 oder 11, wobei, das insbesondere fernsteuerbare, Fahrzeug, insbesondere Luftfahrzeug, aufweisend mindestens eine Kamera und/oder mindestens ein Positionsbestimmungsmittel und/oder mindestens ein Orientierungserfassungsmittel zur Erfassung der Orientierung der Kamera und/oder des Fahrzeugs **dadurch gekennzeichnet, dass** es
eine Vorrichtung zur Beschränkung des von der Kamera erfassten Bildbereichs in Abhängigkeit von Daten des mindestens einen Positionsbestimmungsmittels und/oder des mindestens einen Orientierungserfassungsmittels aufweist, wobei die Vorrichtung zur Beschränkung insbesondere mindestens eine bewegliche Blende umfasst
und/oder
eine Vorrichtung zur Bearbeitung der von der Kamera erfassten Bilder aufweist, die eingerichtet ist zum Bereinigen der Bilder in Abhängigkeit von Daten des mindestens einen Positionsbestimmungsmittels und/oder des Orientierungserfassungsmittels, insbesondere bei der Erfassung der Bilder, so, dass Bildinformation von außerhalb einer vorbestimmten Fläche und/oder eines vorbestimmten Raums liegenden Objekten gelöscht werden und/oder dass die Bilder der Kamera ausschließlich Bildinformation aus der vorbestimmten Fläche oder dem vorbestimmten Raum enthalten.

13. System nach einem der vorstehenden Ansprüche 10 bis 12, wobei das Fahrzeug aufweisend eine Steuereinrichtung aufweist, die eingerichtet ist, die Vorrichtung zur Beschränkung in Abhängigkeit von Daten des mindestens einen Positionsbestimmungsmittels und/oder Orientierungserfassungsmittels so anzusteuern und/oder zubewegen, dass der von der Kamera aufgenommene Bildbereich so mittels der mindestens einer Blende beschnitten wird, dass Bildinformation von außerhalb einer vorbestimmten Fläche und/oder eines vorbestimmten Raums liegenden Objekten ausgeblendet werden und/oder dass der von der Kamera aufgenommene Bildbereich so mittels der mindestens eine Blende beschnitten wird, dass die Bilder der Kamera ausschließlich Bildinformation aus der vorbestimmten Fläche oder dem vorbestimmten Raum enthalten.

14. System nach einem der vorstehenden Ansprüche 10 bis 13, wobei der losgelöste Sensor einen Bewegungssensor, Wetterzustandssensor, insbesondere Niederschlagssensor und/oder Windmesser und/oder Temperaturmesser, Geräuschsensor und/oder Geruchssensor umfasst und/oder es sich bei dem erfassten Zustand oder Ereignis um die Auslösung eines Bewegungssensors und/oder eines andersartigen Kontaktes, ein Geräusch und/oder andere durch den Sensor erfassbare Zustände oder Ereignisse handelt.

15. System nach einem der vorstehenden Ansprüche 10 bis 14, wobei das Fahrzeug und/oder der Hangar Steuerungsmittel des Fahrzeugs aufweist, wobei das Steuerungsmittel so eingerichtet ist, das die vorbestimmte Route selbstständig gesteuert und/oder auch durch Zusammenwirken mit anderen Mitteln, beispielsweise dem Hangar und/oder einer im Hangar befindlichen Steuerung und/oder anderen Steuerungen, zurücklegt wird.
